# EUROPEAN PATENT APPLICATION

(11) **EP 0 624 623 A1**
(43) Date of publication of application: **17.11.1994**
(21) Application number: 94201336.8
(22) Date of filing: 11.05.1994
(51) Int. Cl.: C08L 35/06, C08L 21/00, C08J 5/18

(54) **Polymer composition**

(30) Priority: 14.05.1993 BE 9300503
(71) Applicant: DSM N.V., NL-6411 TE Heerlen (NL)
(72) Inventor: Crevecoeur, Guido, NL-5643 TE Eindhoven (NL); Borggreve, Reinoldus Jozef Maria, NL-6336 VG Hulsberg (NL)

(57) **Abstract**

Polymer composition containing a copolymer that contains units of a vinyl-aromatic compound and an α-β-unsaturated dicarboxylic anhydride compound and an elastomer, at least a portion of the elastomer containing groups that bond chemically or interact physically with the copolymer. The elastomer constitutes the continuous phase in the polymer composition and the copolymer the disperse phase.

## Description

The invention relates to a polymer composition containing a copolymer that contains units of a vinyl-aromatic compound and an α-β-unsaturated dicarboxylic anhydride compound and an elastomer, at least a portion of the elastomer containing groups that bond chemically or interact physically with the copolymer.

Such polymer compositions are known from EP-A-0,140,423, which describes a polymer composition of:
- 50-95 wt.% of a copolymer containing styrene and/or α-methylstyrene and maleic anhydride,
- 5-50 wt.% of an ethylene-propylene elastomer or an ethylene-propylene-diene elastomer modified by grafting with a compound containing hydroxyl, amide or amine groups.

The hydroxyl, amide or amine groups can bond chemically with the dicarboxylic anhydride compounds in the copolymer.

Such a polymer composition has a high impact resistance and a high stiffness. Because of this combination of properties the polymer composition has proved to be suitable for the manufacture of objects in which these properties are important, for example housings of electrical equipment.

However, there is a need for a polymer composition which, unlike the polymer composition that is known from EP-A-0,140,423, has a high degree of flexibility so that the polymer composition can for example be folded in a simple manner and feels soft. Such a polymer composition is for example very suitable for handles and as a top layer on various other objects, such as dashboards or shavers.

Surprisingly a very useful, flexible polymer composition is obtained because the elastomer in the polymer composition constitutes the continuous phase and the copolymer in the polymer composition constitutes the disperse phase.

In addition to good flexibility, the polymer composition has a large number of further advantages. For example, the polymer composition according to the invention has good mechanical properties at elevated temperatures (for example at 120°C), such as good stiffness, tensile strength and elongation at break.

Furthermore, thanks to the presence of the copolymer, the polymer composition according to the invention can be well attached to other materials, such as metals and polar plastics, per example by heating the polymer composition to above the glass transition temperature of the copolymer and then contacting it with the surface or by contacting the polymer composition with a thermosetting resin like an unsaturated polyester resin and curing the resin.

A further advantage are the favourable rheological properties of the composition of the invention, such that the composition can for example easily be extruded into films or blow moulded into thin walled containers.

A measure of the flexibility of the polymer composition according to the invention is the Shore hardness as determined according to ASTM D 2240-68. Preferably the Shore D hardness of the polymer composition is lower than 70.
Preferably a thermoplastic elastomer is used the elastomer. By using a thermoplastic elastomer it is possible, after the polymer composition has been processed into a film, for example by means of known extrusion or calendering techniques, to manufacture objects from the film thus obtained by means of thermoforming.

Preferably the polymer composition according to the invention contains spherical or globular particles consisting of the copolymer. These spherical or globular particles preferably have a diameter of less than 10 µm, with particular preference of less than 5 µm. If the copolymer is present in the polymer composition in particles of at most 10 µm, preferably in particles of at most 5 µm, the mechanical properties of the polymer composition, in particular the elongation at break, improve still further.

The polymer composition according to the invention, in which the elastomer constitutes the continuous phase and the copolymer constitutes the disperse phase, can be obtained by choosing a sufficiently high elastomer content. The elastomer content above which the elastomer constitutes the continuous phase is dependent on for example the ratio of the viscosities at processing conditions of the elastomer and the copolymer. The lower this ratio, the lower the elastomer content above which the elastomer constitutes the continuous phase. In general the elastomer constitutes the continuous phase if the elastomer content equals or exceeds 50 wt.%.

The polymer composition according to the invention preferably contains:
- 5-60 wt.% copolymer that contains units of a vinyl-aromatic compound and an α-β-unsaturated dicarboxylic anhydride compound,
- 40-95 wt.% of the elastomer.
More preferably the composition according to the invention contains 25-50 wt.% of the copolymer and 50-75 wt.% of the elastomer.

The elastomer in the polymer composition according to the invention has a glass transition temperature of below -20°C. If the elastomer is a block copolymer, the elastomer contains at least one polymer block with a glass transition temperature of below -20°C.

Preferably the viscosity of the elastomer is lower than the viscosity of the copolymer at processing conditions.

The elastomer can be chosen from for example the group of the commonly known ethylene-propylene copolymers, such as ethylene-propylene-diene rubbers (EPDM) and ethylene-propylene rubbers (EPR), chloroprenes, acrylate-ester copolymers, polyisobutylene rubbers, styrene-butadiene rubbers (SBR), styrene-butadiene-styrene rubbers (SBS), ethylene-vinylacetate copolymers, polyisoprenes, ethylene octene copolymers like linear low density polyethylene and very-low-density polyethylene (VLDPE) and polybutadiene.
Mixtures of these elastomers may also be used.

Preferably VLDPE is used as the elastomer. By using a VLDPE as the elastomer the polymer composition obtains a high tear resistance.

Of essential importance, however, is that the elastomer in the polymer composition according to the invention contains groups that bond chemically or interact physically with the copolymer. Examples of physical interaction are hydrogen bridges, dipole dipole interaction etc. If the polymer composition according to the invention contains an elastomer from the above group of elastomers at least a portion of the elastomer in the polymer composition is present as a modified elastomer or as a styrene-ethylene/butylene-styrene ABA block copolymer. 'Modified elastomer' is understood to be an elastomer that has been modified with reactive compounds so that the elastomer contains groups that bond chemically or interact physically with the copolymer. These reactive compounds are chosen from the group comprising anhydrides, acids, epoxides, isocyanates, oxazolines, primary and secondary amines, amides, alcohols, thiols, acid chlorides, acrylates, esters and carbonates.

Examples of suitable reactive compounds are: glycidyl methacrylate, glycidyl ethylmaleate, glycidyl acrylate, glycidyl ethylfumarate, methylacrylate, ethylacrylate, butylacrylate, methylmethacrylate, ethylmethacrylate, butylmethacrylate,
hydroxyethylacrylate, hydroxypropylmethacrylate, metaisopropenyldimethylbenzylisocyanate, fumaric acid, maleic acid, allyl-glycidyl ether, N-vinyl caprolactam, vinyltrimethoxysilane, vinyl-tris-(2-methyoxyethoxy)silane, diethylvinylphosphonate, di-(2-chloroethyl)vinyl phosphonate, acrylic acid, maleic anhydride, itaconic anhydride, citraconic anhydride, methylmaleic anhydride, chloromaleic anhydride, acrylamide, amino-propylene and hydroxyethylmethacrylate (HEMA). Preferably the amount of modified elastomer or the amount of styrene-ethylene/butylene-styrene ABA block copolymer present in the polymer composition is at least 0.3 wt.%, with particular preference 1-25 wt.%.

The elastomer preferably is chosen from the group of thermoplastic block copolymers in which one of the chain segments provides the thermoplastic properties of the block copolymer.

Prefered block copolymers are polyether-ester-polyamide block copolymers, polyether-polyester block copolymers and polyester-polyester block copolymers. The polymer compositions that contain these thermoplastic block copolymers have a high ductility.

Polyether-ester-polyamide block copolymers, for example, are composed of chain segments consisting of polyamide and chain segments consisting of polyether. The polyether segments provide the thermoplastic properties of the block copolymer. The polyamide segments are obtained through condensation polymerisation of dicarboxylic acids and diamines, through polymerisation of cyclic lactam compounds, through polycondensation of aminocarboxylic acids or through copolymerisation of cyclic lactam compounds and dicarboxylic acids and/or diamines. Terephthalic acid, isophthalic acid, oxalic acid, adipic acid, sebacic acid and 1,4-cyclohexyldicarboxylic acid can be mentioned as examples of dicarboxylic acids. Ethylenediamine, pentamethylenediamine, hexamethylenediamine, decamethylenediamine, 1,4-cyclohexyldiamine and m-xylenediamine can be mentioned as examples of diamines. Caprolactam and lauryllactam can be mentioned as examples of cyclic lactam compounds and 9-aminononanic acid and 11-aminoundecanic acid can be mentioned as examples of aminocarboxylic acids.

The polyamide segments obtained in the polymerisation reaction are for example segments of nylon 6, nylon 66, nylon 610, nylon 612, nylon 11, a nylon 66/610 copolymer and a nylon 6/66 copolymer. Preferably polyamide segments of nylon 11 and nylon 12 are used.

The polyether segments can be obtained through condensation polymerisation of for example:
- bis-(3-aminopropyl)-polytetrahydrofuran having the general formula H₂N-(CH₂)₃-O-[(CH₂)₄-O]ₓ-(CH₂)₃-NH₂, where x is a whole number of 2-30; preferably of 6-30,
- bis-(3-aminopropyl)-polypropylene oxide having the general formula H₂N-(CH₂)₃-O-[(CH₂)₃-O]_{y}-(CH₂)₃-NH₂, where y is a whole number of 2-30; preferably of 6-30.
- polyether glycols, for example polyoxypropylene glycol and polyoxytetramethylene glycol.
Preferably use is made of polyether glycols.

The polyether-ester-polyamide elastomers are usually formed via a condensation reaction of one or more of the above polyamide segments and one or more of the above polyether segments with a dicarboxylic acid. Polyether-ester-polyamide elastomers which contain 50-95 wt.% polyether segments are preferred. With particular preference the amount of polyether segments is 65-95 wt.%. Examples of dicarboxylic acids that can be used are terephthalic acid, isophthalic acid, oxalic acid, adipic acid, sebacic acid and 1,4-cyclohexyldicarboxylic acid.

Methods for the synthesis of polyether-polyester block copolymers and polyester-polyester block copolymers are described in for example the Encyclopedia of Polymer Science and Engineering, Second Edition, Volume 12, John Wiley & Sons, 1988.

The copolymer in the polymer composition according to the invention contains units of a vinyl-aromatic compound and an α-β-unsaturated dicarboxylic anhydride compound having a M_{w} of above 10,000. Preferably the M_{w} is above 50,000. If a copolymer having a M_{w} of less than 10,000 is used the mechanical properties of the polymer composition are insufficient.

Examples of suitable vinyl-aromatic compounds are styrene, α-methylstyrene and styrene derivatives with substituents on the aromatic ring.

Suitable substituents are for example halogens and alkyl groups with 1-8 carbon atoms. The vinyl-aromatic units are chosen from for example the group consisting of styrene, α-methylstyrene, p-methylstyrene, ethylstyrene, p-t-butylstyrene, o-chlorostyrene and p-chlorostyrene. Optionally, a mixture of various aromatic compounds can be used in the preparation of the copolymer. Preferably use is made of styrene, α-methylstyrene or a mixture of these compounds.

The α-β-unsaturated dicarboxylic anhydride compound can be chosen from for example the group comprising: maleic anhydride, itaconic anhydride, citraconic anhydride, methylmaleic anhydride and chloromaleic anhydride.
Preferably use is made of maleic anhydride. Optionally the α-β-unsaturated dicarboxylic anhydride compound may be partially imidised. This can be realised for example by causing the α-β-unsaturated dicarboxylic anhydride compound to react with ammonia, methylamine or aniline.

A method for the preparation of copolymers of styrene and maleic anhydride is described in Chapters 9 and 10 of 'Maleic Anhydride', by B.V. Trivedi and B.M. Culbertson, Plenum Press, 1982, 1st edition.

Usually the copolymer contains 5-50 wt.% of an α-β-unsaturated dicarboxylic anhydride compound and 50-95 wt.% of a vinyl-aromatic compound.

Copolymers of a vinyl-aromatic compound and an α,β-unsaturated dicarboxylic anhydride compound are commonly known and are commercially available. In addition to the units of a vinyl-aromatic compound and an α-β-unsaturated dicarboxylic anhydride compound, the copolymer may contain other units, too. Examples of such units are monomers from the group comprising acrylonitrile, methacrylonitrile, alkyl esters having 1-8 carbon atoms of (meth)acrylic acid, such as methylmethacrylate and ethylmethacrylate, cycloalkyl esters having 5-10 carbon atoms of (meth)acrylic acid, such as cyclohexyl methacrylate, aryl esters having 6-14 carbon atoms and phenylmethacrylate.

Heating of the copolymers of a vinyl-aromatic compound and an α-β-unsaturated dicarboxylic anhydride compound causes CO₂ to split of, as described in EP-A-0,400,139.

The copolymer obtained after the heating is preferably used in a composition comprising a polyether polyester or a polyester polyester elastomer because such a composition comprises very fine particles of the copolymer and shows very good mechanical properties, especially a good impact resistance at low temperature.

The polymer composition according to the invention may also contain a compatibiliser to obtain very fine particles. The amount of compatibiliser used is preferably between 0.001 and 1 mol per mol of units of the α-β-dicarboxylic anhydride compound in the copolymer.

The compatibiliser is a metal salt of a metal of one of groups 2-11 of the Periodic System of the Elements (Handbook of Chemistry and Physics, 70th Edition, CRC Press, 1989-1990). Preferably the metal is a bivalently positively charged metal, for example Mg²⁺, Ca²⁺ and Zn²⁺. As counterion or counterions the metal salt may contain for example an oxide, stearate, acetate, bromide, carbonate, chloride, fluoride, iodide, nitrate, sulphate and/or a sulphide group.

The metal salt may contain various metals and/or counterions. Preferably use is made of a zinc salt, with particular preference zinc stearate and/or zinc acetate.

The polymer compositions according to the invention can be obtained by mixing the individual components in a suitable, commonly known, mixer. As mixer use may be made of a batch kneader, a single- or twin-screw extruder or a static mixer.

Optionally, customary additives may be added to the polymer composition according to the invention. Examples of these additives are stabilisers, lubricants, kaolin, glass, pigment, organic or inorganic fillers, reinforcing fibres and conducting fibres, impact modifiers, antioxidants, flame retardants and colourants.

The polymer compositions according to the invention are very suitable for for example injection moulding, blow moulding and for use in films. These films can be produced by extruding or calendering the polymer composition. Optionally, the films may be drawn. These films preferably have a Shore A hardness of 40 to a Shore D hardness of 90. The films can be thermoformed well. Films that can be thermoformed very well are obtained if the elastomer in the polymer composition according to the invention is a thermoplastic elastomer. Very good top layers for dashboards can for example be formed from the film by thermoforming.

Objects produced by thermoforming the film can be well attached to other surfaces, such as metals and polar plastics. By attaching the thermoformed dashboard coating layer, formed from the polymer composition according to the invention, optionally by means of glueing, to a polymer carrier material in which the copolymer constitutes the continuous phase, a dashboard is obtained that can be simply recycled in its entirety without the coating layer and the carrier material having to be separated beforehand.

The invention will be illustrated below with reference to examples without being limited thereto. A number of properties were determined of the polymer compositions according to the invention. The tensile strength, σ, and the elongation at break, ε_{br}, of the polymer composition were determined by means of a tensile test using rectangular strips, a crosshead speed of 10 mm/min and a clamped length of 50 mm.
The Shore A hardness and the Shore D hardness were determined according to ASTM D 3340-68.
Adhesion tests were performed essentially according to DIN 53278, only without using an adhesive. The polymer composition was attached directly to the metal, in this case aluminium, at a temperature of 220°C. This technique is described in the Encyclopedia of Polymer Science and Engineering (1989), Vol. 16, pp. 807-832. The notched Izod was determined according to 150 180.

### Examples

### Polymers used

- SMA: a styrene-maleic anhydride copolymer containing 28 wt.% maleic anhydride; M_{w} 110,000;
- SMI: the styrene-maleic anhydride copolymer partly imidised with NH₃ containing 18.8 wt.% maleic anhydride and 6.2 wt.% imide; M_{w} 110,000;
- EPR: Tafmer^{R} P0280 (purchased from Mitsui in Japan), a semi-crystalline ethylene-propylene rubber with a propylene content of 29 wt.%;
- PEBAX 25 (purchased from Atochem in France): PEBAX^{R} 2533 SA00, a poly(ether-ester-amide) random block copolymer based on polytetramethylene glycol and nylon 11, Shore D hardness 25;
- PEBAX 40 (purchased from Atochem in France): PEBAX^{R} 4033 SA01 or PEBAX^{R} 4033 SA00, a poly(ether-ester-amide) random block copolymer based on polytetramethylene glycol and nylon 11, Shore D hardness 40;
- Arnitel: Arnitel^{R} EM400, Arnitel^{R} EL550, Arnitel^{R} EM630 (produced by DSM the Netherlands): poly(ether-ester) random block copolymers based on poly(butyleneterephthalate) and polytetramethyleneglycol with respective Shore-D hardnesses of 40, 55, and 63;
- SMC: sheet moulding compound, P25.200, produced by BWR, in Germany;
- Kraton: Kraton^{R} G1652 (purchased from Shell in the Netherlands), a styrene-ethylene/butylene-styrene ABA block copolymer;
- NH₂-EPDM: amino-modified Keltan^{R} 520 (produced by DSM in the Netherlands), containing approx. 1 mol.% NH₂.

### Examples I and II

45 wt.% SMA or SMI was mixed with 55 wt.% PEBAX in a Berstorff twin-screw extruder at a temperature of 260°C and a throughput of 5 kg/h. Subsequently films were extruded from this polymer composition using a Schwabenthan 30-mm single-screw extruder with a 150-mm-wide flat-sheet die having a die slit of 1 mm (throughput 100 g/min, T=260°C).
The films were thermoformed using an Ilig^{R} machine, at a temperature of 200°C. The morphology of the films was examined by means of scanning electron microscopy (SEM). The mechanical properties (modulus, tensile strength and elongation at break) were determined using rectangular strips of the films which had not been thermoformed, cut parallel to machine direction (clamped length 50 mm, crosshead speed 10 mm/min).

| Example | Shore A/D hardness | film quality | film morphology | modulus of elasticity (MPa) | tensile strength σ (MPa) | elongation at break ε_{br} (%) |
|---|---|---|---|---|---|---|
| I SMA/PEBAX 25 | D 35 | + | + | 47 | 7,5 | 388 |
| II SMI/PEBAX 40 | D 53 | + | + + | 153 | 14,5 | 140 |

The film quality (ductility) of the film was determined after the film had been folded sharply several times:
- ++:: no damage whatsoever was visible after repeated folding;
- +:: no damage was visible after folding several times, after repeated folding slight white discolouration was visible;
- +/-:: white discolouration after folding;
- -:: cracks after repeated folding;
- --:: cracks after folding once.

The morphology of the film was determined with the aid of SEM images:
- ++:: very fine distribution of the copolymer in particles of up to 5 µm;
- +:: idem, with a few longitudinal particles in machine direction;
- +/-:: fine distribution of 1-10 µm, elongated threads in machine direction;
- -:: coarse distribution, particles of over 10 µm, the copolymer phase starts to become co-continuous;
- --:: very coarse distribution, particles of 10-100 µm, the copolymer phase is co-continuous or continuous, layered structure.

### Examples III-VI

The copolymer and the elastomer were mixed in a Berstorff twin-screw extruder, at a temperature of 260°C and a throughput of 4 kg/h, after which the polymer composition was injection-moulded into strips which were used to determine the properties of the polymer composition.
The morphology of the polymer composition was examined by means of scanning electron microscopy (SEM). The tensile strength was determined according to ASTM D 638, using strips injection moulded from the polymer composition (crosshead speed 10 mm/min for the determination of the modulus and 50 mm/min for the determination of the elongation at break).
- Example III:
   45 wt.% SMA and 55 wt.% PEBAX 25;
- Example IV:
   45 wt.% SMA and 55 wt.% PEBAX 40;
- Example V:
   40 wt.% SMA and 60 wt.% Arnitel EM400;
- Example VI:
   40 wt.% SMA, 0.3 wt.% 1,4-diazobicyclooctane (according to EP-A-0,40,139) and 60 wt.% Arnitel EM400.

| Example | Shore A/D hardness | strip morphology | modulus of elasticity E (MPA) | tensile strength σ (MPA) | elongation at break ε_{br} (%) |
|---|---|---|---|---|---|
| III | D 40 | + + | 125 | 9,6 | 88 |
| IV | D 54 | + + | 324 | 16,6 | 57 |
| V | D 48 | + + | 342 | 16,0 | 44 |
| VI | D 58 | + + | 530 | 20,7 | 153 |

The morphology of the injection-moulded strips was determined with the aid of SEM images in the same way as in Examples I and II.

### Examples VII, VIII and Comparative Experiment A

The films according to Examples VII, VIII and Comparative Experiment A were produced in the same manner as described for Examples I and II. However, the polymers used and the amounts of these polymers differed from what was indicated for Examples I and II.
The films according to Examples VIII and IX could be thermoformed very well; the film according to Example VII could not.
- Comparative Experiment A:
   45 wt.% SMA and 55 wt.% EPR (not comprising any reactive groups)
- Example VII:
   30 wt.% SMA, 55 wt.% EPR and 15 wt.% Kraton;
- Example VIII:
   45 wt.% SMA, 49 wt.% EPR and 6 wt.% NH₂-EPDM.

| Example/Comparative Experiment | Shore A/D hardness | film qual. | film morpholo gy | modulus of elasticity E (MPa) | tensile strength σ (MPA) | elongati on at break ε_{br} (%) |
|---|---|---|---|---|---|---|
| A | A 78 | - | - | 230,5 | 6,4 | 6,1 |
| VII | A 79 | + | +/- | 130,5 | 5,7 | 18,2 |
| VIII | A 79 | +/- | +/- | 120 | 3,4 | 83 |

### Example IX

50 wt.% SMA was mixed with 50 wt.% EPR (type P060), which had been modified with 1.1 wt.% maleic anhydride groups, in a 300-g Brabender kneader. The mixing temperature was between 200 and 230°C; the residence time was 14 minutes. Then 0.18 mol (relative to the number of maleic anhydride units in the copolymer) of zinc acetate was added. The polymer composition obtained was homogenised using mixing rolls for 15 minutes at a temperature of 170°C. Then the rolled sheets were compressed using a Fontijne press with a compression area of 500 x 50 mm². The compressing was done at a temperature of 200°C, using the following compression cycle:
7 minutes: pressureless heating;
3 minutes: 10 kN;
2 minutes: 50 kN;
5 minutes: 300 kN;
cooling to 20°C under pressure.

| Example | Shore A/D hardness | tensile strength σ (MPA) | elongation at break ε_{br} (%) | adhesion F_{(average)} (N/mm) | adhesion F_{(average)} (N/mm) |
|---|---|---|---|---|---|
| IX | D 32 | 4,3 | 107 | 2,7 | 3,4 |

The compressed sheet obtained was then deep drawn.

### Examples X-XII

Blends of SMA and Arnitel EM400 or Arnitel EL550 were blended on the Berstorff co-rotating twin screw extruder as in example I. They were subsequently injection moulded at 250 °C into test specimens. In all cases 0.3 wt-% 1,4-diazobicyclooctane was added to the SMA (according to EP-A-0,40,139).
- Example X: 30 wt-% SMA, 0.3 wt-% 1,4-diazobicyclooctane (according to EP-A-0,40,139) and 70 wt-% Arnitel EM400;
- Example XI: 30 wt-% SMA, 0.3 wt-% 1,4-diazobicyclooctane (according to EP-A-0,40,139) and 70 wt-% Arnitel EL550;
- Example XII: 40 wt-% SMA, 0.3 wt-% 1,4-diazobicyclooctane (according to EP-A-0,40,139) and 60 wt-% Arnitel EL550;

It was found that the morphology of these blends was much finer than that of those without 1,4-diazobicyclooctane; the SMA was dispersed in the Arnitel matrix as particles with a diameter of 1 µm, and less. As a result, the materials exhibited a good balance of toughness and hardness/stiffness and further a favourable low coefficient of thermal expansion (CTE).

| Example | Shore-D Hardness | E [MPA] | σ [MPA] | ε_{br} [%] | n. Izod -20 °C [kJ/m²] | n. Izod -40 °C [kJ/m²] | CTE [1/K]*10⁻⁵ |
|---|---|---|---|---|---|---|---|
| XI | 50 | 209 | 18.2 | 350 | n.b. | 24 | 11.6 |
| XII | 69 | 830 | 27.8 | 245 | 4.8 | 2.7 | 12.5 |
| XIII | 74 | 1253 | 34.3 | 70 | 2.6 | 2.3 | 11.3 |
| E: tensile modulus σ: tensile strength ε_{br:} tensile strain to break n.b.: no break | | | | | | | |

### Examples XIII-XVII

SMA and Arnitel were compounded on a Werner & Pfleiderer ZSK-40 co-rotating twin screw extruder at 250 °C, and a throughput between 50 and 80 kg/h.
- Example XIII:
   10 wt-% SMA, 0.3 wt-% 1,4-diazobicyclooctane (according to EP-A-0,40,139) and 90 wt-% Arnitel EM400;
- Example XIV:
   15 wt-% SMA, 0.3 wt-% 1,4-diazobicyclooctane (according to EP-A-0,40,139) and 85 wt-% Arnitel EM400;
- Example XV:
   20 wt-% SMA, 0.3 wt-% 1,4-diazobicyclooctane (according to EP-A-0,40,139) and 80 wt-% Arnitel EM400;
- Example XVI:
   30 wt-% SMA, 0.3 wt-% 1,4-diazobicyclooctane (according to EP-A-0,40,139) and 70 wt-% Arnitel EM400;
- Example XVII:
   40 wt-% SMA and 60 wt-% Arnitel EM630

In examples XIII through XVII the injection moulding temperature was 250 °C.

| Example | Shore-D Hardness | E [MPA] | σ [MPA] | ε_{br} [%] | n. Izod -20 °C [kJ/m²] | n. Izod -40 °C [kJ/m²] |
|---|---|---|---|---|---|---|
| XIV | 36 | 65 | 23 | 970 | n.b. | n.b. |
| XV | 39 | 81 | 22 | 890 | n.b. | n.b. |
| XVI | 42 | 105 | 22 | 740 | n.b. | n.b. |
| XVII | 46 | 194 | 21 | 490 | n.b. | n.b. |
| E: tensile modulus σ: tensile strength ε_{br}: tensile strain to break n.b.: no break | | | | | | |

The composition of Example XV exhibited good melt strength, and was extrusion-blow moulded on a Bekum BAE1 extrusion-blow moulding machine, the extruder barrel temperature was 210 °C, and the connector and die were 180 °C. Pure Arnitel EM400, as a reference, did not have sufficient melt strength for blow moulding.

The composition of Example XVII was extruded on the Schwabenthan extruder as described in examples I and II, at 240 °C, into a flat film of 100 µm thickness. This film was subsequently placed in the mould of Hoesch 360 Tons platen press, and a layer of SMC was moulded on top of it at 150 °C, a pressure of 100 bar (pressure in the material), press closing rate 3 mm.s⁻¹, total pressing time 3 minutes. The sheet had a good appearance, and showed very good adhesion to the SMC; when the sheet was cut from the SMC with a razor blade, glass fibres and SMC parts remained in the sheet, indicating the level of adhesion to the SMC. Two additional tests were performed: the entire part was placed in an oven at 180 °C (the temperature for on-line painting of automotive parts) for 30 minutes, and another part was subjected to boiling water for 1 hour. In both tests, neither the appearance, nor the adhesion to the SMC deteriorated to any noticeable extent.

## Claims

1. Polymer composition containing a copolymer that contains units of a vinyl-aromatic compound and an α-β-unsaturated dicarboxylic anhydride compound and an elastomer, at least a portion of the elastomer containing groups that bond chemically or interact physically with the copolymer, characterised in that the elastomer constitutes the continuous phase of the polymer composition and that the copolymer constitutes the disperse phase of the polymer composition.

2. Polymer composition according to claim 1,
characterised in that the elastomer is a thermoplastic elastomer.

3. Polymer composition according to claim 1 or claim 2,
characterised in that the polymer composition contains spherical or globular particles consisting of the copolymer.

4. Polymer composition according to claim 3,
characterised in that the spherical or globular particles have a diameter of less than 10 µm.

5. Polymer composition according to claim 3,
characterised in that the spherical or globular particles have cross sections of less than 5 µm.

6. Polymer composition according to any one of claims 1-5, characterised in that the polymer composition contains:
- 5-60 wt.% copolymer containing units of a vinyl-aromatic compound and an α-β-unsaturated dicarboxylic anhydride compound;
- 40-95 wt.% of the elastomer.

7. Polymer composition according to any one of claims 1-5, characterised in that the polymer composition contains:
- 25-50 wt.% copolymer containing units of a vinyl-aromatic compound and an α-β-unsaturated dicarboxylic anhydride compound;
- 50-75 wt.% of the elastomer.

8. Polymer composition according to any one of claims 1-7, characterised in that the polymer composition contains a compatibiliser.

9. Polymer composition according to claim 8, characterised in that the polymer composition contains 0.001-1 mol of the compatibiliser per mol of units of the α-β-unsaturated dicarboxylic anhydride compound in the copolymer.

10. Polymer composition according to any one of claims 1-9, characterised in that as the elastomer a polyamide-ester-polyether block copolymer is used.

11. Polymer composition according to any one of claims 1-9, characterised in that as the elastomer a polyester-polyether block colpolymer is used.

12. Polymer composition according to any one of claims 1-9, characterized in that as the elastomer a copolymer of ethylene and octene is used.

13. Moulded parts moulded from a polymer composition according to any one of claims 1-12.

14. Film formed from a polymer composition according to any one of claims 1-12.

15. Film according to claim 14, characterised in that the film has a Shore A hardness of 40 to a Shore D hardness of 90.

16. Moulded parts moulded from the film according to claim 14 or claim 15.

17. Dashboard containing a moulded part according to claim 16.
